# EUROPÄISCHE PATENTANMELDUNG

(11) **EP 0 882 919 A2**
(43) Veröffentlichungstag der Anmeldung: **09.12.1998**
(21) Anmeldenummer: 98109409.7
(22) Anmeldetag: 23.05.1998
(51) Int. Cl.: F16K 31/10

(54) **Hydraulisches Mehrwegeventil, insbesondere Lenkartenwählventil für mehrachsig gelenkte Fahrzeuge**

(30) Priorität: 03.06.1997 DE 19723219
(71) Anmelder: HYDROTECHNIK FRUTIGEN AG, CH-3714 Frutigen (CH)
(72) Erfinder: Gerber, Jürg, 3714 Frutigen (CH)

(57) **Zusammenfassung**

Die Erfindung betrifft ein hydraulisches Mehrwegeventil, insbesondere Lenkartenwählventil für mehrachsig gelenkte Fahrzeuge, mit einem oder mehreren Wege-Sitzventilen (31, 33, 35, 37, 39, 41, 43), die zumindest zwei Schaltstellungen aufweisen und die über Leitungen für das Hydraulikmedium untereinander und mit einer Anzahl gesteuerter Anschlüsse (A, B, C, D; L, R) derart verbunden sind, dass die gewünschten Schaltstellungen des Mehrwegeventils (13) durch die Betätigung der Sitzventile (31 - 43) wählbar sind, und mit einer Betätigungseinrichtung (29) zur Betätigung der Sitzventile (31 - 43), wobei die Betätigungseinrichtung (29) in den Schaltstellungen des Mehrwegeventils (13) rastbar ist.

## Beschreibung

Die Erfindung betrifft ein hydraulisches Mehrwegeventil, insbesondere Lenkartenwählventil für mehrachsig gelenkte Fahrzeuge, mit den Merkmalen des Oberbegriffs des Patentanspruchs 1.

Lenkartentwählventile werden eingesetzt bei hydrostatisch mehrachsig gelenkten Fahrzeugen, vorzugsweise bei Fahrzeugen mit zwei Lenkachsen, wie Mobilbagger, Kommunalfahrzeuge, Schneefräsen, Walzen und dergleichen. Die Lenkartenwählventile dienen zur Schaltung der gewünschten Lenkart, insbesondere zur Auswahl zwischen der Vorderachslenkung, Hinterachslenkung, Zweiachslenkung und Hundegang-Lenkung.

Derartige Lenkartenwählventile sind in den verschiedensten Ausführungsformen bekannt. Beispielsweise kann ein Lenkartenwählventil als handbetätigtes Drehschieberventil ausgebildet sein. Diese Ausführungsform weist jedoch den Nachteil auf, dass infolge des funktionsbedingtem Spiels zwischen den Drehschieber und den Ventilgehäuse eine Leckage des Druckmediums gegeben ist, die mit vertretbaren Aufwand kaum auf gewünschte Werte reduziert werden kann. Des Weiteren besteht bei einem Lenkartenwählventil in der Regel die Anforderung, dass das Wählventil in Fahrerhaus angebracht sein muss, um eine komfortable Bedienung des Fahrzeugs zu gewährleisten. Bei handbetätigten Drehschieberventilen bedingt dies eine aufwendige Leitungsführung, da das Druckmedium selbstverständlich bis zum Ventil herangeführt werden muss.

Des Weiteren sind elektrisch betätigbare Schieberventile bekannt, die zwar den letztgenannten Nachteil handbetätigter Ventile vermeiden, die jedoch nach wie vor den Nachteil einer Leckagebehaftung aufweisen. Bekannte elektrisch betätigbare Schieberventile sind häufig als gerastete Schieberventile ausgebildet. Diese weisen einen magnetbetätigten Kolben auf, der aus einer Mittelstellung in zwei weitere Schaltstellungen überführbar ist, wobei der Kolben in diesen beiden weiteren Stellungen einrastet, um nicht die Betätigungskräfte fortwährend aufrecht erhalten zu müssen. Damit sind bei derartigen Lenkartenventilen nur drei Lenkarten auswählbar.

Es ist zudem bekannt, ein Lenkartenwählventil aus mehreren Wege-Sitzventilen aufzubauen, welche untereinander mit entsprechenden Leitungen verbunden sind. Durch den Einsatz von Sitzventilen wird der Nachteil einer Leckagebehaftung, wie in Fall von Schieberventilen, vermieden. Da es bei derart ausgebildeten Ventilen unerwünscht ist, dass eine Bedienperson zur Auswahl einer Lenkart mehrere Ventile betätigen muss, weisen diese Lenkartenwählventile grundsätzlich elektrisch betätigbare Wege-Sitzventile auf, welche von einer Steuereinheit in der gewünschten Weise ansteuerbar sind. Dies bedingt jedoch den Nachteil, dass bei einem Defekt eines elektrischen Betätigungsgliedes bzw. einem Spannungsausfall unvermittelt undefinierbare und höchst gefährliche Ventilstellungen auftreten können. Dies kann zu einer plötzlichen Einstellung einer falschen Lenkart führen, wobei die Bedienperson dies erst an der unerwarteten Reaktion des Fahrzeugs bemerkt. Damit ist in solchen Fällen eine unmittelbare Gefährdung des Fahrzeugs, der Bedienperson bzw. der Fahrzeugumgebung gegeben.

Der Erfindung liegt ausgehend von diesen Stand der Technik die Aufgabe zugrunde, ein hydraulisches Mehrwegeventil, insbesondere Lenkartenwählventil für mehrachsig gelenkte Fahrzeuge, zu schaffen, welches die vorgenannten Nachteile vermeidet und insbesondere die sichere Auswahl einer Schaltstellung ermöglicht, wobei gleichzeitig im Ventil eine Leckage vermieden werden soll.

Die Erfindung löst diese Aufgabe mit den Merkmalen des Patentanspruchs 1.

Die Erfindung geht von der Erkenntnis aus, dass zur Vermeidung einer Leckage das Mehrwegeventil aus einem oder mehreren Wege-Sitzventilen aufgebaut werden muss. Die einzelnen Wege-Sitzventile müssen mit einer Betätigungseinrichtung betätigbar sein, welche in den beiden Schaltstellungen der Sitzventile rastbar ist.

Hierdurch ergibt sich der Vorteil, dass auch bei einem Ausfall der Spannungsversorgung für die vorzugsweise elektrisch ansteuerbare Betätigungseinrichtung keine unerwünschten oder undefinierbaren Schaltzustände auftreten können.

In einer Ausführungsform der Erfindung kann für jedes Wege-Sitzventil eine eigene Betätigungsvorrichtung vorgesehen sein, wobei die mehreren Betätigungsvorrichtungen insgesamt die Betätigungseinrichtung bilden. Jede Betätigungsvorrichtung ist dabei so ausgebildet, dass in den beiden Schaltstellungen der Wege-Sitzventile eine Rastung erfolgt.

Beispielsweise kann in diesen Fall jedes Wege-Sitzventil elektromagnetisch betätigbar sein. Allerdings muss in diesem Fall die Rastbarkeit jeder Betätigungsvorrichtung separat vorgesehen werden. Zudem kann es in extremen Fällen dazu kommen, dass dennoch ungewünschte Schaltzustände auftreten: Dies könnte beispielsweise dann der Fall sein, wenn die Spannungsversorgung zufällig genau zu Beginn bzw. während eines Schaltvorganges erfolgt. Ist in diesem Fall nicht die völlig synchrone Betätigung der einzelnen Wege-Sitzventile gewährleistet, so ist theoretisch denkbar, dass ein Teil der Sitzventile bereits geschaltet hat und der verbleibende Teil der Sitzventile noch in seiner ursprünglichen Stellung steht.

Um dies zu vermeiden, ist bei der bevorzugten Ausführungsform der Erfindung die Betätigungseinrichtung so ausgebildet, dass eine mechanische Kopplung der Sitzventile gegeben ist. Selbstverständlich ist bei dieser Ausführungsform die Betätigungseinrichtung so ausgebildet, dass der Schaltvorgang elektrisch auslösbar ist, so dass das Mehrwegeventil an beliebiger Stelle im Fahrzeug vorgesehen sein kann und lediglich elektrische Steuerleitungen vom zu bevorzugenden Bedienort an das Mehrwegeventil herangeführt werden müssten.

Bei der bevorzugten Ausführungsform weist das Mehrwegeventil eine Betätigungseinrichtung auf, wobei für jedes Sitzventil eine auf einer Welle angeordnete Kurvenscheibe vorgesehen ist, welche jeweils das betreffende Sitzventil beaufschlagt.

Hierdurch ergibt sich der Vorteil einer sehr einfachen mechanischen Kopplung der Sitzventile und eine einfache Realisierung einer synchronen Betätigung der Ventile. Zudem ist auf diese Weise die Betätigung einer Mehrzahl von Sitzventilen möglich, so dass auch eine in praktisch sinnvollen Grenzen denkbare Anzahl von Schaltstellungen realisierbar ist.

Die Welle der Betätigungseinrichtung ist bei der bevorzugten Ausführungsform der Erfindung mit einem Klinkenschaltwerk verbunden, welches eine rastende abschnittsweise Drehbewegung der Welle bewirkt.

Das Klinkenschaltgetriebe weist vorzugsweise ein gazahntes Rad auf, welches mittels eines bewegbaren Stellelements drehbar ist. Eine Rückdrehung des dezahnten Rads wird mit mittels eines Sperrelements verhindert.

Bei der bevorzugten Ausführungsform der Erfindung ist das Stellelement als zum gezahnten Rad konzentrisch drehbares Ringelement ausgebildet, in welchem ein federnd beaufschlagtes Mitnahmeelement vorgesehen ist, welches die Zähne des gezahnten Rads beaufschlagt. Das Sperrelement ist als im Wesentlichen in radialer Richtung oder hierzu leicht geneigter Richtung federnd beaufschlagter Stift ausgebildet.

Das drehbare Ringelement ist mit einem im Wesentlichen linear bewegbaren Betätigungsstößel verbunden, so dass eine im Wesentlichen lineare Bewegung des Betätigungsstößels in eine Drehbewegung des Ringelements umgesetzt wird.

Der Betätigungsstößel ist bei der bevorzugten Ausführungsform mittels eines Elektromagneten bewegbar.

Die vorstehend dargestellte konstruktive Ausbildung der Betätigungseinrichtung ist mit geringem Aufwand realisierbar und ermöglicht die zuverlässige synchrone Betätigung der Sitzventile. Die so ausgebildete Betätigungseinrichtung kann auch mit beliebig ausgebildeten Wege-Ventilen verwendet werden, die zur Erreichung der Funktion des Mehrwegeventils entsprechend gekoppelt sind.

Bei der bevorzugten Ausführungsform der Erfindung ist vorgesehen, dass die Betätigungseinrichtung bei Ausfall des ansteuerbaren Betätigungselements manuell betätigbar ist. Hierzu kann beispielsweise der mittels eines Elektromagneten betätigbare Betätigungsstößels so ausgebildet sein, dass dessen freies Ende manuell betätigbar ist. Damit ist auch in Notsituationen eine Betätigung des Mehrwegeventils möglich.

Weitere Ausführungsformen der Erfindung ergeben sich aus den Unteransprüchen.

Die Erfindung wird nachstehend anhand eines in der Zeichnung dargestellten Ausführungsbeispiels näher erläutert. In der Zeichnung zeigen:
- Fig. 1: eine schematische Darstellung eines zweiachsig gelenkten Fahrzeugs unter Verwendung eines 6/4-Lenkartenwählventils;
- Fig. 2: eine schematische Darstellung einer Ausführungsform des erfindungsgemäßen hydraulischen 6/4-Wegeventils für das Fahrzeug in Fig. 1 bei verschiedenen Schaltstellungen (Fig. 2a: Hinterachslenkung; Fig. 2b: Vorderachslenkung; Fig. 2c: Zweiachslenkung; Fig. 2d: Hundegang-Lenkung) und
- Fig. 3: ein konstruktiv durchgestaltetes Ausführungsbeispiel der Betätigungseinrichtung für das Wegeventil in Fig. 2.

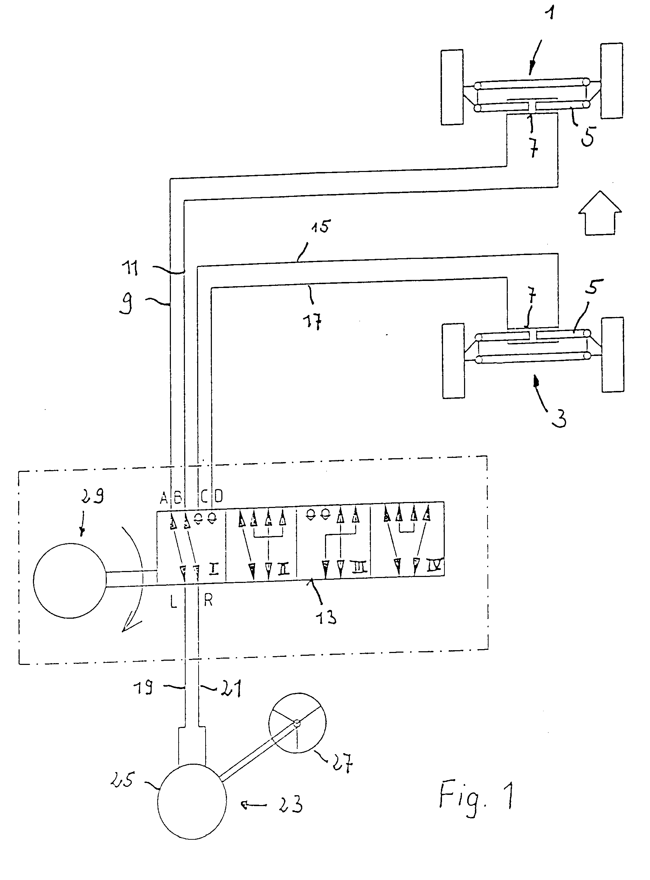

Fig. 1 zeigt schematisch die Komponenten eines zweiachsig gelenkten Fahrzeugs, soweit diese für das Verständnis der Erfindung wesentlich sind. Das im Übrigen nicht näher dargestellte Fahrzeug meist eine Vorderachse 1 und eine Hinterachse 3 auf, welche jeweils lenkbar ausgebildet sind. Hierzu weist jede Achse eine translatorisch bewegbare Lenkstange 5 auf, welche mittels eines Hydraulikzylinders 7 bewegbar ist.

Der Hydraulikzylinder 7 der Vorderachse 1 ist über Hydraulikleitungen 9, 11 mit Anschlüssen A, B eines 6/4-Lenkartenwählventils 13 verbunden.

Weitere Anschlüsse C, D des Lenkartenwählventils 13 sind über Hydraulikleitungen 15, 17 mit dem Hydraulikzylinder 7 der Hinterachse 3 verbunden.

Wird einer der Hydraulikzylinder 7 von einer Seite her mit dem Hyraulikmedium beaufschlagt, so bewegt sich die jeweilige Lenkstange 5 der betreffenden Achse 1, 3 in die durch die Druckkraft bestimmte Richtung und leitet einen entsprechenden Lenkvorgang ein. Die Schwenkbewegung des betreffenden Rads wird durch jeweils ein schematisch dargestelltes Lenkgestänge erreicht. Wird beispielsweise der Hydraulikzylinder 7 der Vorderachse 1 über die Leitung 9 mit den Druckmedium beaufschlagt, so bewegt sich die Lenkstange 5 nach rechts, wodurch die Lenkbewegung der Räder der Vorderachse 1 nach links erzeugt wird. Entsprechend lassen sich durch eine Beaufschlagung der Hydraulikzylinder 7 die gewünschten Lenkbewegungen der Achsen 1, 3 erzeugen.

Das Lenkartenwählventil 13 weist zwei weitere Anschlüsse L, R auf, welche über Hydraulikleitungen 19, 21 mit einer Lenksteuerung 23 des Fahrzeugs verbunden sind.

Die Lenksteuerung 23 umfasst eine Einheit 25, deren Ausgänge mit den Hydraulikleitungen 19, 21 verbunden sind. Die Einheit 25 ist mit einen Lenkrad 27 des Fahrzeugs gekoppelt. Bei einer Drehung nach links des Lenkrads 27 erzeugt die Einheit 25 einen Zufluss von Hydraulikmedium in die Leitung 19. Entsprechend erzeugt die Einheit 25 bei einer Lenkraddrehung nach rechts einen Zufluss von Hydraulikmedium in Richtung auf das Lenkartenwählventil 13 in die Hydraulikleitung 21. Die Menge des in die betreffende Leitung 19, 21 zugeführten Hydraulikmediums hängt dabei vom Drehwinkel des Lenkrads 27 ab.

Das Lenkartenwählventil 13 weist in der in Fig. 1 dargestellten Ausführungsform vier Schaltstellungen auf, welche mit I, II, III, IV bezeichnet sind.

Die schaltstellung I definiert eine ausschließliche Steuerung des Fahrzeugs mittels der Vorderachse (Vorderachssteuerung), während die Schaltstellung III eine ausschließliche Steuerung des Fahrzeugs mittels der Hinterachse 3 festlegt (Hinterachssteuerung). Die Schaltstellung II bewirkt eine Zweiachssteuerung, wobei die Vorderachse 1 und die Hinterachse 3 jeweils gleichsinnig angesteuert werden. Mit anderen Worten, es wird jeweils gleichzeitig eine Lenkbewegung von Vorder- und Hinterachse nach rechts bzw. links erzeugt. Die Schaltstellung IV bewirkt die sog. Hundegang-Steuerung des Fahrzeugs, wobei die Vorderachse 1 und die Hinterachse 3 jeweils gegensinnig angesteuert werden. Mit anderen Worten, wird an der Vorderachse 1 eine Lenkbewegung nach links erzeugt, so wird an der Hinterachse 3 eine Lenkbewegung nach rechts erzeugt und umgekehrt.

Zur Auswahl der Lenkarten in den Schaltstellungen I bis IV weist das Lenkartenwählventil 13 eine Betätigungseinrichtung 29 auf. Die Betätigungseinrichtung umfasst zumindest ein oder mehrere mechanische Stellglieder für das Einstellen der Ventilstellungen, wobei die Auswahl der Ventilstellungen durch eine elektrische Ansteuerung der Betätigungseinrichtung erfolgen kann (nicht dargestellt).

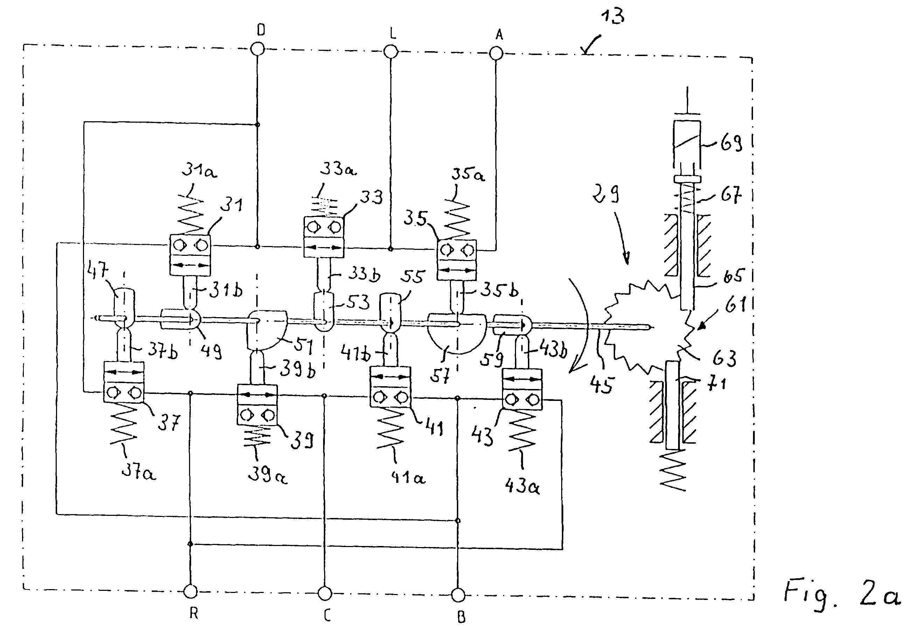

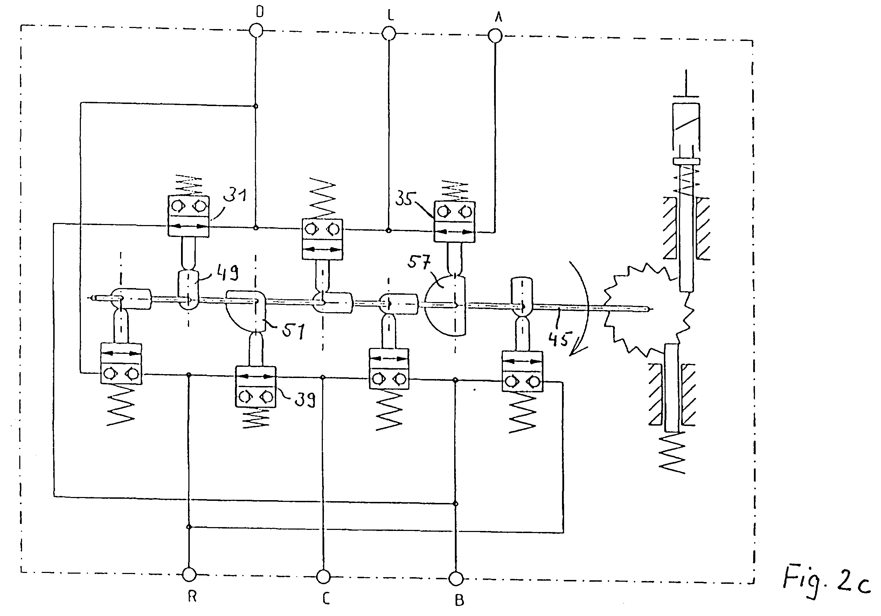

Fig. 2a zeigt den schematischen Aufbau des Lenkartenwählventils 13 nach der Erfindung, wobei die Schaltstellung III, also die Hinterachssteuerung des Fahrzeugs dargestellt ist.

Wie aus Fig. 2a ersichtlich, ist das 6/4-Wegeventil 13 durch insgesamt sieben 2/2-Wegeventile 31, 33, 35, 37, 39, 41, 43 gebildet, welche über Hydraulikleitungen so verbunden sind, dass sich die Schaltstellungen I bis IV des Lenkartenwählventils 13 durch entsprechende Schaltstellungen der 2/2-Wegeventile 31 bis 43 realisieren lassen.

Die 2/2-Wegeventile sind als Sitzventile ausgebildet, welche jeweils eine Durchlassstellung und eine gesperrte Stellung aufweisen. Die Ausbildung als Sitzventile bietet den Vorteil, dass im gesperrten Zustand keinerlei Leckage auftritt.

Die 2/2-Wegeventile sind jeweils mittels federnder Elemente 31a bis 43a so beaufschlagt, dass sie bei Wegfall der Betätigungsbewegung in den gesperrten Zustand überführt werden.

Zur Betätigung der Wege-Sitzventile 31 bis 43 weisen diese jeweils einen Stößel 31b bis 43b auf.

Die Betätigungseinrichtung 29 des in den Fig. 2a bis 2d dargestellten Ausführungsbeispiels umfasst eine Welle 45, auf welcher Kurvenscheiben 47, 49, 51, 53, 55, 57, 59 vorgesehen sind. Die Kurvenscheiben 47 bis 59 sind fest mit der Welle 45 verbunden, so dass bei einer Drehung der Welle 45 die Stößel 31b bis 43b der Wege-Sitzventile 31 bis 43 von den Kurvenscheiben in der gewünschten Weise betätigt werden. Hierzu müssen selbstverständlich die Konturen und Phasenbeziehungen der Kurvenscheiben in geeigneter Weise gewählt werden.

Bei der in Fig. 2a dargestellten Hinterachssteuerung beaufschlagen lediglich die Kurvenscheiben 53 und 51 die Ventile 33 und 39, so dass jeweils eine Verbindung des Eingangs L mit dem Ausgang D und eine Verbindung des Eingangs R mit dem Ausgang C des Lenkartenwählventils 13 erfolgt. Alle übrigen Wege-Sitzventile befinden sich in gesperrtem Zustand.

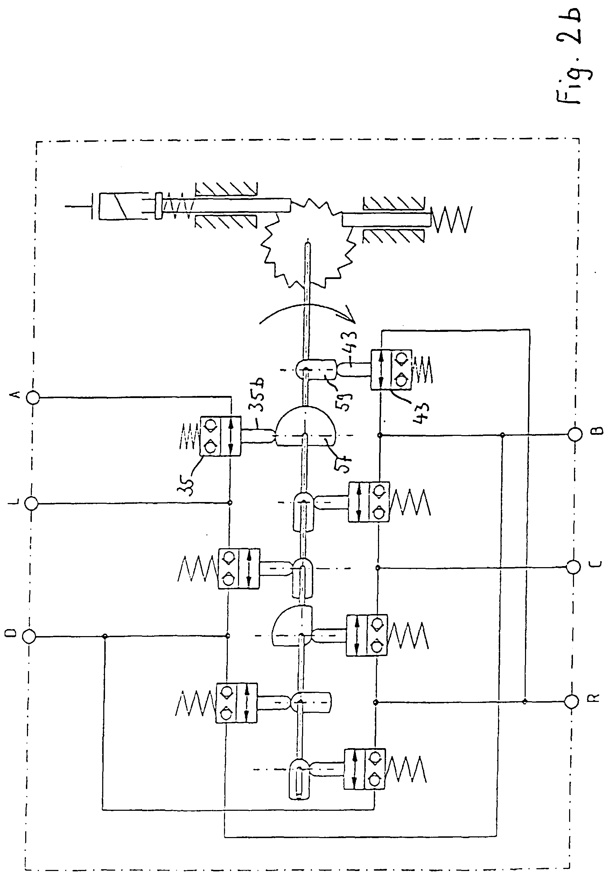

Fig. 2b zeigt dagegen die Schaltstellung I des Lenkartenwählventils 13, also die Vorderachsenlenkung, wobei der Eingang L mit den Ausgang A und der Eingang R mit dem Ausgang B verbunden ist. Hierzu befinden sich, wie aus Fig. 2b ersichtlich, lediglich die Wege-Sitzventile 35 und 43 in Durchlassstellung und werden hierzu in entsprechender Weise von den Kurvenscheiben 57 bzw. 59 beaufschlagt. Alle übrigen Wege-Sitzventile befinden sich wiederum in gesperrtem Zustand.

Fig. 2c zeigt die Zweiachssteuerung des Fahrzeugs, wobei der Eingang L des Lenkartenwählventils 13 mit dem Ausgang A, der Eingang R mit dem Ausgang C und darüber hinaus die Ausgänge B und D untereinander verbunden sind. So wird beispielsweise bei einer Druckbeaufschlagung der Leitung 19 die Vorderachse 1 nach links (Druckbeaufschlagung der Leitung 9) und durch die Druckbeaufschlagung der Leitung 17 infolge der Verbindung mit der "Rückflussleitung" 11 an der Hinterachse 3 ebenfalls eine Lenkbewegung nach links erzeugt.

Wie aus Fig. 2c ersichtlich, werden hierzu die Wege-Sitzventile 31, 35 und 39 in den Durchlasszustand gesteuert. Dies erfolgt durch eine entsprechende Drehung der Welle 45 über die den Sitzventilen jeweils zugeordneten Kurvenscheiben 49, 51 und 57.

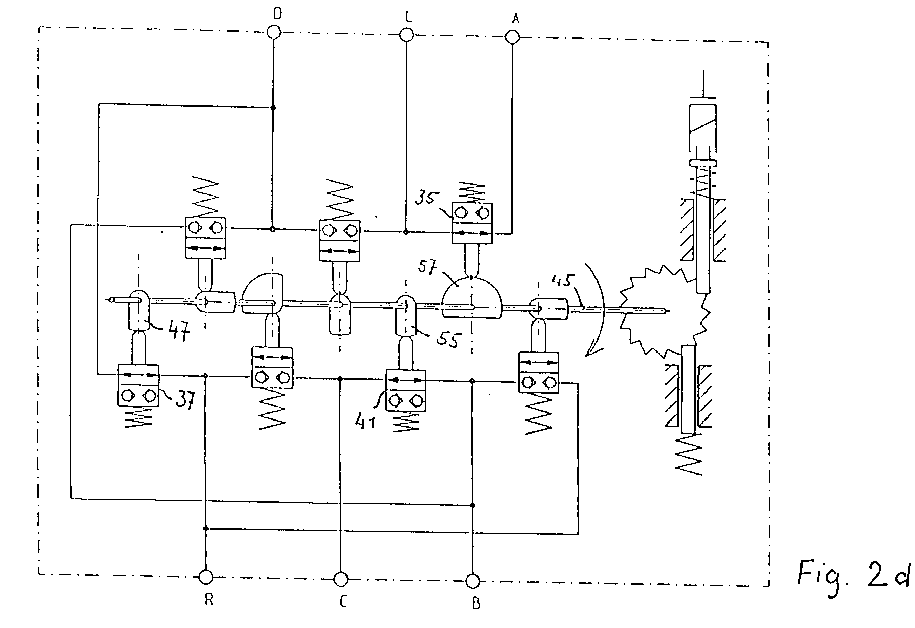

Schließlich zeigt Fig. 2d die Schaltstellungen der Wege-Sitzventile 31 bis 43 für die Schaltstellung IV des Lenkartenwählventils 13, also für die sog. Hundegang-Steuerung.

Wie aus Fig. 1 ersichtlich, muss hierzu der Eingang L mit dem Ausgang A und der Eingang R mit dem Ausgang D sowie dem Ausgang B mit den Ausgang C des Ventils verbunden werden. Um dies zu erreichen, müssen die Sitzventile 35, 37, 41 in den geschlossenen Zustand gesteuert werden (vgl. Fig. 2d). Alle übrigen Sitzventile befinden sich im gesperrten Zustand. Bei dieser schaltstellung wird beispielsweise bei einer Druckbeaufschlagung der Leitung 19 die Vorderachse 1 nach links gelenkt und die Hinterachse 3 infolge der Verbindung der "Rückflussleitung" 11 mit der Leitung 15 nach rechts gelenkt.

Um bei einer Drehung der Welle 45 jeweils nur die zugehörigen Sitzventile in den Durchlasszustand zu steuern, müssen die Kurvenscheiben die aus den Fig. 2a bis 2d ersichtliche Form und Winkelposition relativ zu einander aufweisen. Diese hängt selbstverständlich von der Ausrichtung der Stößel 31b bis 43b der Sitzventile 31 bis 43 ab. Insofern ist die Ausbildung der Kurvenscheiben gemäß der Fig. 2a bis 2d nur als schematisches Beispiel zu verstehen.

Wie aus Fig. 2a ersichtlich, kann die Betätigungseinrichtung 29 zur Drehung der Welle 45 ein Schaltgetriebe 61 aufweisen.

Das Schaltgetriebe besteht aus einem fest mit der Welle 45 verbundenen gezahnten Rad 63, welches von einem Stellelement 65 in Form eines verschiebbaren Stößels beaufschlagt ist. Der Stößel 65 wird von einer Feder 67 in einer Ausgangsstellung gehalten und ist mittels eines Elektromagneten 69 bei dem in Fig. 2a dargestellten Ausführungsbeispiel in vertikaler Richtung nach unten auslenkbar. Hierdurch erfolgt eine Drehung des gezahnten Rads 63 und damit der Welle 45. Die Auslenkung des Stellelements 65 durch den Elektromagneten 69 ist dabei so bemessen, dass mit jeder Verschiebebewegung des Stellelements 65 das gezahnte Rad 63 um einen jeweils einem Zahn entsprechenden Winkelbetrag weitergedreht wird.

Nach jeder Verschiebebewegung des Stellelements 65 wird dieses durch die Feder 67 wieder in die Ausgangsstellung zurückbewegt, so dass bei einer erneuten Aktivierung des Elektromagneten 69 ein erneutes Weiterschalten des Schaltgetriebes um einen Zahn des gezahnten Rads 63 erfolgt.

Um ein Rückdrehen des gezahnten Rads 63 zu verhindern, greift eine als federbeaufschlagter verschiebbarer Stößel ausgebildete Sperrklinke 71 in die Zähne des gezahnten Rads 63 ein.

Selbstverständlich kann auch jedes beliebige andere Schaltgetriebe anstelle der in den Fig. 2a bis 2d dargestellten Ausführungsform Verwendung finden. Grundsätzlich eignet sich auch ein elektromotorischer Drehantrieb zur Bewegung der Welle 45. Jedoch weist die Verwendung eines Schaltgetriebes den Vorteil auf, dass zumindest in den Schaltstellungen Rastpositionen existieren. Hierzu kann das Schaltgetriebe selbstverständlich auch so ausgebildet sein, dass mit jedem Schaltvorgang des Schaltgetriebes (um einen Zahn) ein Übergang von einer Schaltstellung I bis IV des Lenkartenwählventils 13 auf die jeweils nächste Schaltstellung erfolgt.

Des Weiteren ermöglicht die Verwendung eines Schaltgetriebes auf relativ einfache Weise die Realisierung einer manuellen Notbetätigung des Getriebes, falls die elektromechanische Betätigung des Stellelements 65 ausfällt.

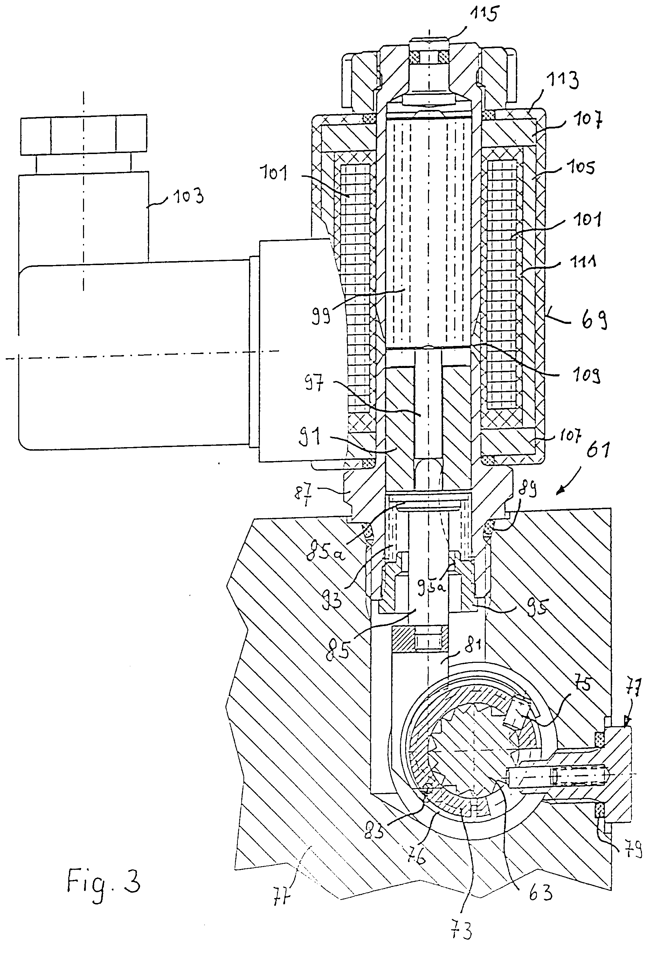

Fig. 3 zeigt eine konstruktiv durchgebildete Ausführungsform für das Schaltgetriebe 61 im Schnitt.

Das gezahnte Rad 63, das fest mit der in Fig. 3 nicht gezeigten Welle 45 verbunden ist, wird von einen Ringelement 73 umgeben, welches zusammen mit einem im Ringelement 73 in im Wesentlichen radialer Richtung verschiebbar geführten Stift 75 das Stellelement 65 bildet. Das Ringelement 73 ist an seiner Außenseite von einen gebogenen federnden Element 76 umgeben, welches mit seinem federnden Schenkel die Außenseite des Stifts 75 beaufschlagt, während das andere Ende der Feder 76 zur Verbindung mit dem Ringelement 73 mit einem ungebogenen Bereich in einen Schlitz im Ringelement 73 eingreift.

Das gesamte Schaltgetriebe 61 ist in einen Gehäuse 77 des Lenkartenwählventils 13 angeordnet. In diesem Gehäuse 77 ist auch die Sperrklinke 71 angeordnet, welche einen Stift aufweist, welcher die Zähne des gezahnten Rads 63 beaufschlagt. Der Stift ist in einem in das Gehäuse 77 eingeschraubten Teil verschiebbar und federbeaufschlagt gehalten. Zwischen dem Gehäuse 77 und dem Halteteil der Sperrklinke 71 ist ein O-Ring 79 zur Abdichtung angeordnet.

Das Ringelement 73 greift mit einem Teil seines Umfangs in eine Gabel 81 ein und ist mit den Gabelenden mittels eines Gelenkstifts 83 verbunden. Bei einer im Wesentlichen vertikalen Bewegung der Gabel 81 wird demzufolge diese im Wesentlichen translatorische Bewegung in eine Drehbewegung des Ringelements 73 umgesetzt.

In dem oberen Bereich der Gabel 81 ist ein mit einem Gewinde versehenes Ende eines Stößels 85 eingeschraubt. Der Stößel greift in einen unteren Bereich eines Magnetrohrs 87 des Elektromagneten 69 ein.

Das Magnetrohr weist an seinem unteren Ende ein Außengewinde auf, mit welchem es in eine Bohrung mit Innengewinde in das Gehäuse 77 eingeschraubt ist. Zur Abdichtung gegenüber dem Gehäuse 77 ist wiederum ein O-Ring 89 zwischen einer Schulter des Magnetrohrs 87 und dem Gehäuse 77 vorgesehen. In dem Magnetrohr 87 ist oberhalb des Stößels 85 ein ortsfestes Element 91 aus einen ferromagnetischen Material, vorzugsweise Stahl, vorgesehen. Das Element 91 weist eine zentrische Bohrung auf, in welche ein oberer Bereich des Stößels 85 eingreift. Unterhalb dieses oberen Bereichs weist der Stößel 85 einen Flansch 85a auf, der von einer Feder 93 beaufschlagt wird, welche sich mit ihrem unteren Ende an der Oberseite einer Mutter 95 abstützt, die von unten in das Magnetrohr 87 eingeschraubt ist. Damit wird bei inaktivem Zustand des Elektromagneten 69 der Stößel 85 mit seinem Flansch 85a gegen die Unterseite des Elements 91 bewegt und auf diese Weise eine Ausgangsstellung des Stößels 85 bzw. des Ringelements 73 definiert.

Die Mutter 95 weist eine Bohrung 95a auf, welche einen geringfügig größeren Durchmesser aufweist als der Außendurchmesser des Stößels 85. Hierdurch wird ein ausreichendes Spiel für den Stößel 85 ermöglicht, so dass dieser bei einer Vertikalbewegung eine leichte Kippbewegung ausführen kann, die für das Erzeugen einer Drehbewegung des Ringelements 73 erforderlich ist. Andererseits ist der Durchmesser der Bohrung 95a so klein gewählt, dass eine ausreichende Führung des Stößels 85 gewährleistet ist.

Innerhalb der zentrischen Bohrung des Elements 91 wird der Stößel 85 von oben von einen Stift 97 beaufschlagt, der fest mit einem Hauptstößel 99 verbunden ist. Der Hauptstößel 99 ist im Wesentlichen in der oberen Hälfte des Magnetrohrs 87, d.h. in einem Raum oberhalb des Elements 91 verschiebbar geführt. Das Magnetrohr ist von einer Wicklung 101 umgeben, deren Anschlüsse in ein Steckerelement 103 herausgeführt sind. Das Steckerelement 103 ist somit mit einem nicht näher dargestellten Kabel koppelbar, so dass auf diese Weise die Wicklung 101 mit Strom beaufschlagt werden kann.

Bei einer Strombeaufschlagung der Wicklung 101 erzeugt diese einen magnetischen Fluss in einen magnetischen Kreis, der durch die Ankerteile aus ferromagnetischem Material 105, 107, den oberen Bereich des Magnetrohrs 87 und den Hauptstößel 99 sowie das Element 91 und den unteren Bereich des Magnetrohrs 87 gebildet ist. Um einen magnetischen Kurzschluss zu vermeiden, weist das Magnetrohr 87 in einem mittleren Bereich einen Isolierbereich 109 aus einem magnetisch isolierenden Material auf.

Auf diese Weise ist gewährleistet, dass bei einer Strombeaufschlagung der Wicklung 101 der Hauptstößel 99 zusammen mit dem Stift 97 vertikal nach unten bewegt wird. Hierbei beaufschlagt der Stift 97 den Stößel 85 und erzeugt so eine Drehbewegung des Ringelements 73, so dass ein Schaltvorgang das Schaltgetriebes durchgeführt wird.

Der Vollständigkeit halber sei erwähnt, dass die Wicklung 101 gegenüber dem Ankerteil 105 selbstverständlich mittels einer Isolierschicht 111 abgeschirmt ist. Des Weiteren sind die Ankerteile 107 (die als Scheiben ausgebildet sein können) und das Ankerteil 105 zum Schutz gegen Umwelteinflüsse und mechanische Beschädigungen von einer weiteren Isolierschicht 113 umgeben.

An seinem oberen Ende weist das Magnetrohr 97 eine zentrische Bohrung auf, in welcher ein manuell betätigbarer Notbetätigungsstift verschiebbar gehalten ist. Dieser weist an seinem unteren Ende einen Bereich mit sich erweiterndem Durchmesser auf, so dass zusammen mit einer Innenschulter des Magnetrohrs 87 ein Anschlag für den Notbetätigungsstift 115 gebildet ist.

Der Notbetätigungsstift 115 beaufschlagt mit seiner Unterseite den Hauptstößel 99, so dass auch bei einem Ausfall der elektromechanischen Betätigung durch eine Strombeaufschlagung der Wicklung 101 ein manuelles Betätigen des Schaltgetriebes möglich ist. Hierzu kann das obere Ende des Notbetätigungsstiftes 115, welches über das Magnetrohr 87 hinausragt oder an dessen oberen Ende zumindest zugänglich ist, manuell betätigt werden.

## Patentansprüche

1. Hydraulisches Mehrwegeventil, insbesondere Lenkartenwählventil für mehrachsig gelenkte Fahrzeuge,
a) mit einen oder mehreren Wege-Sitzventilen (31, 33, 35, 37, 39, 41, 43), die zumindest zwei Schaltstellungen aufweisen und die über Leitungen für das Hydraulikmedium untereinander und mit einer Anzahl gesteuerter Anschlüsse (A, B, C, D; L, R) derart verbunden sind, dass die gewünschten Schaltstellungen des Mehrwegeventils (13) durch die Betätigung der Sitzventile (31 - 43) wählbar sind, und
b) mit einer Betätigungseinrichtung (29) zur Betätigung der Sitzventile (31 - 43),
**dadurch gekennzeichnet,**
c) dass die Betätigungseinrichtung (29) in den Schaltstellungen des Mehrwegeventils (13) rastbar ist.

2. Mehrwegeventil nach Anspruch 1, **dadurch gekennzeichnet**, dass die Betätigungseinrichtung (29) eine mechanische Kopplung der Sitzventile (31 - 43) aufweist.

3. Mehrwegeventil nach Anspruch 1 oder 2, **dadurch gekennzeichnet**, dass die Betätigungseinrichtung (29) für jedes Sitzventil (31 - 43) eine auf einer Welle (45) angeordnete Kurvenscheibe (47, 49, 51, 53, 55, 57, 59) umfasst, welche jeweils das betreffende Sitzventil (31-43) beaufschlagt.

4. Mehrwegeventil nach Anspruch 3, **dadurch gekennzeichnet**, dass die Welle (45) mittels eines rastenden Getriebes (61), vorzugsweise eines Schaltgetriebes, rotierbar ist.

5. Mehrwegeventil nach Anspruch 4, **dadurch gekennzeichnet**, dass auf der Welle ein gezahntes Rad (63) angeordnet ist, welches mittels eines bewegbaren Stellelements (65) drehbar ist.

6. Mehrwegeventil nach Anspruch 5, **dadurch gekennzeichnet**, dass das Stellelement (65) als zum gezahnten Rad (63) konzentrisch drehbares Ringelement (73) ausgebildet ist, in welchem ein federnd beaufschlagtes Mitnahmeelement (75) vorgesehen ist, welches die Zähne des gezahnten Rads (63) beaufschlagt.

7. Mehrwegeventil nach Anspruch 6, **dadurch gekennzeichnet**, dass das Ringelement (73) mit einem im Wesentlichen linear bewegbaren Betätigungsstößel (81, 85, 97, 99) verbunden ist.

8. Mehrwegeventil nach Anspruch 7, **dadurch gekennzeichnet**, dass der Betätigungsstößel (81, 85, 97, 99) mittels eines Elektromagneten (69) bewegbar ist.

9. Mehrwegeventil nach einem der vorhergehenden Ansprüche, **dadurch gekennzeichnet**, dass die Betätigungseinrichtung (29) bei Ausfall der gesteuerten Bewegung manuell betätigbar ist.
